(19) Europäisches Patentamt
European Patent Office
Office européen des brevets

(11) **EP 2 210 078 B1**

(12) **EUROPÄISCHE PATENTSCHRIFT**

(45) Veröffentlichungstag und Bekanntmachung des Hinweises auf die Patenterteilung:
**21.05.2014 Patentblatt 2014/21**

(21) Anmeldenummer: **08848822.6**

(22) Anmeldetag: **11.11.2008**

(51) Int Cl.:
*G01L 17/00* (2006.01)   *G01B 21/18* (2006.01)

(86) Internationale Anmeldenummer:
**PCT/DE2008/001843**

(87) Internationale Veröffentlichungsnummer:
**WO 2009/062475 (22.05.2009 Gazette 2009/21)**

(54) **VERFAHREN ZUM FESTSTELLEN DES DRUCKES UND DER PROFILTIEFE BEI EINEM FAHRZEUGREIFEN**

METHOD FOR ASCERTAINING THE PRESSURE AND THE PROFILE DEPTH IN A VEHICLE TYRE

PROCÉDÉ POUR DÉTERMINER LA PRESSION ET LA PROFONDEUR DE SCULPTURE D'UN PNEUMATIQUE DE VÉHICULE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.11.2007 DE 102007054156**

(43) Veröffentlichungstag der Anmeldung:
**28.07.2010 Patentblatt 2010/30**

(73) Patentinhaber: **Ventech Systems GmbH
86663 Asbach-Bäumenheim (DE)**

(72) Erfinder: **PINGEL, Ulrich
45770 Marl (DE)**

(74) Vertreter: **Tönhardt, Marion
Boehmert & Boehmert
Pettenkoferstrasse 20-22
80336 München (DE)**

(56) Entgegenhaltungen:
**WO-A-2006/003467    DE-A1- 4 316 984**

## Beschreibung

Die Erfindung betrifft ein Verfahren zum Feststellen des Druckes und der Profiltiefe bei einem pneumatischen Fahrzeugreifen, wobei mit einer Anordnung aus Lastsensoren, die Kraftsignale für ein zweidimensionales Muster der Kraftverteilung liefert, die von dem Fahrzeugreifen in Kontakt mit den Sensoren ausgeübt wird, wenn sich das Fahrzeug über die Anordnung bewegt, gemessen wird und der Reifendruck aus der Kraftverteilung unabhängig von der Herstellungsart oder dem Modell des Rades und des Fahrzeuges bestimmt und gegebenenfalls angezeigt wird.

Ein derartiges Verfahren zum Feststellen des Druckes in einem pneumatischen Fahrzeugreifen ist aus der US 5 396 b817 bekannt. Hier wird eine Zeilenanordnung von Kraftsensoren beschrieben, über die der Fahrzeugreifen rollt. Die Geschwindigkeit kann dabei aus dem Signalanstieg und dem Signalabfall bestimmt werden, während der Reifen über die Lastsensoranordnung läuft. Allerdings hängt die Messung der Geschwindigkeit über die Steigung der Flanken des Signals vom Reifendruck ab und wird durch Profileinflüsse sehr ungenau.

Störende Effekte des Reifenprofils können hierbei jedoch nicht berücksichtigt werden. Insbesondere der Signalanstieg wird durch Querprofilierung der Reifen, zum Beispiel Querrillen oder schräg verlaufende Profilrillen, wesentlich verändert, und es ist davon auszugehen, dass der Signalanstieg nicht mehr linear verläuft.

Es ist daher eine Aufgabe der vorliegenden Erfindung, ein Verfahren zum Feststellen des Druckes und der Profiltiefe bei einem pneumatischen Fahrzeugreifen eines Fahrzeuges zur Verfügung zu stellen, bei dem die Einflüsse des Reifenprofils bei der Druckmessung soweit als möglich reduziert werden und das Reifenprofil exakt dargestellt werden kann.

Diese Aufgabe wird durch ein Verfahren mit den Merkmalen des Anspruchs 1 gelöst. Vorteilhafte Ausgestaltungen sind Gegenstand der Unteransprüche.

Das erfindungsgemäße Verfahren zum Feststellen des Druckes und der Profiltiefe bei einem pneumatischen Fahrzeugreifen, der an einem Fahrzeug angebracht ist, wobei der Druck mit Hilfe einer Anordnung aus Lastsensoren, die Kraftsignale für ein zweidimensionales Muster der Kraftverteilung liefert, die von dem Fahrzeugreifen in Kontakt mit den Lastsensoren ausgeübt wird, wenn sich das Fahrzeug über die Anordnung bewegt, ermittelt wird; wobei der Reifendruck aus der Kraftverteilung unabhängig von der Herstellungsart oder dem Modell des Reifens und des Fahrzeugs bestimmt wird. Es kann dabei zweckmäßigerweise eine Einrichtung zum Anzeigen des Druckes vorgesehen sein.

Vorzugsweise umfasst die Anordnung aus Lastsensoren, mindestens zwei Reihen von Lastsensoren, die in Fahrtrichtung hintereinander angeordnet sind, wobei zumindest eine Reihe der Lastsensoren gegen eine oder mehrere Reihen der Lastsensoren um einen vorbestimmten Betrag quer zur Fahrtrichtung versetzt sind.

Grundsätzlich ist aber auch jedes andere Druckmessverfahren einsetzbar.

Weiter erfindungsgemäß wird vor, während oder nach dem Feststellen des Druckes die Profiltiefe des Reifens gemessen.

Es werden der Reifendruck und die Profiltiefe in aufeinander folgenden Stationen gemessen.

Bei der Reifendruckmessung sollte der vorbestimmte Betrag kleiner als die Abmessung eines Lastsensors quer zur Fahrtrichtung sein. Im Allgemeinen werden in einer Reihe baugleiche Lastsensoren verwendet.

Ferner kann vorgesehen sein, dass bei zumindest einer der Reihen der Lastsensoren die Länge der Lastsensoren größer ist als bei zumindest einer weiteren Reihe der Lastsensoren. Dabei mildert ein kurzer Lastsensor den Kompensationsaufwand, der betrieben werden muss, wenn ein hoher Reifendruck bei gleichzeitig geringer Last vorliegt. Mit einem langen Sensor werden die Querrillen besser ausgemittelt.

Insgesamt ist es vorteilhaft, mehrere Reihen mit relativ kurzen Lastsensoren vorzusehen, obwohl sich dadurch die Anzahl der erforderlichen Lastsensoren erhöht und die Kosten ansteigen. Man erhält allerdings auch mehr auswertbare Information.

Das erfindungsgemäße Messprinzip ist physikalisch gesehen ein Kompromiss zwischen einer möglichst langen Sensorfläche, die wünschenswert ist, da sie Profileinflüsse minimiert, und einer möglichst kurzen Sensorfläche. Die Auflagelänge des Reifens in Längsrichtung bei hohem Luftdruck und geringer Last ist nur sehr kurz. Eine geringere Auflagelänge als die Länge der Sensorfläche führt, wenn keine zusätzliche Kompensation vorgenommen wird, zu erheblichen Fehlmessungen. Dies limitiert den Bereich für die Sensorlänge erheblich.

Die einzelnen Sensorflächen sollten so eng wie möglich aneinander liegen, vorzugsweise sowohl in Fahrtrichtung als auch quer dazu dicht an dicht.

Durch das versetzte Anordnen der Sensorelemente können die einzelnen Sensorflächen auch breiter ausgestaltet werden als der eigentliche Sensorabstand quer zur Fahrtrichtung, ohne jedoch die Ortsauflösung wesentlich zu reduzieren,

Insgesamt lassen sich die störenden Einflüsse von Längsrillen des Profils zuverlässig minimieren, da der von den Längsrillen hervorgerufene Effekt herausgemittelt werden kann. Dazu ist eine flächige Abdeckung mit Lastsensoren optimal, da dann eine Längsrille jedenfalls erfasst wird.

Vorteilhaft ist eine Recheneinheit vorgesehen, die für Signale von einer ersten Reihe der Lastsensoren und für Signale von einer zweiten Reihe der Lastsensoren jeweils den Schwerpunkt gemäß

$$p_t = \frac{\sum (I_p \cdot p)}{\sum I_p}$$

berechnet, wobei $I_P$ die Intensität am Ort $p$ ist und wobei der Schwerpunkt $p_t$ zum Zeitpunkt $t$ durchfahren wurde, und aus der Differenz von Schwerpunkt $p_{t2}$ der zweiten Reihe der Lastsensoren und Schwerpunkt $p_{t1}$ der ersten Reihe der Lastsensoren die Geschwindigkeit $v$ gemäß

$$v = \frac{p_{t2} - p_{t1}}{t_2 - t_1}$$

ermittelt. Aus der Zeitdifferenz der Signale der beiden Reihen lassen sich nun die Geschwindigkeit des Fahrzeuges und seine Beschleunigung so sehr genau rechnen.

Dabei ist bevorzugt, dass die Lastsensoren parallel oder quasi-parallel gelesen werden. Bei der quasi-parallelen Methode geschieht das Einlesen der Daten so schnell, dass keine nennenswerten Verzögerungen oder Messfehler entstehen, oder es werden entsprechende Korrekturmaßnahmen getroffen.

Die genaue Auflagelänge des Reifens auf jeder Sensorlänge kann unter Nutzung der Geschwindigkeitsinformation berechnet werden, indem das Kraftsignal in Längeneinheiten umgerechnet wird und die Sensorlänge subtrahiert wird. Für den Fall, dass die Auflagelänge kleiner ist als die Sensorlänge oder in den Bereich der Sensorlänge kommt, wird zweckmäßigerweise eine Kompensationsrechnung durchgeführt. Dabei reicht in vielen Fällen eine lineare Kompensation aus.

Es sollte angemerkt werden, dass die Geschwindigkeitsmessung zur Bestimmung des Reifendrucks nicht unbedingt nötig ist. Sie kann auch eigenständig durchgeführt werden. Bei der erfindungsgemäßen Vorgehensweise zur Bestimmung der Geschwindigkeit reduzieren sich die Einflüsse von Profil, Spur und Sturz.

Durch differentielle Betrachtung insbesondere der ansteigenden Flanke der Signale werden Profileffekte sichtbar und können berücksichtigt werden.

Insbesondere die Profiltiefe hinterlässt bei dem typischen, konischen Profileinschnitt ein charakteristisches Signal. Bei großer Profiltiefe sind die Profilrillen sehr tief und breit und hinterlassen hohe Signalpegel in Quer- als auch Längsrichtung. Mit sinkender Profiltiefe wird auch die Profilrille schmaler, welches die Signalamplitude reduziert. Hieraus lässt sich die Profiltiefe einfach ableiten. Somit ist vorgesehen, dass unter Verwendung der Amplitude der Kraftsignale in Fahrtrichtung und/oder quer zur Fahrtrichtung eine Recheneinheit die Profiltiefe des Reifens bestimmt.

Eine zusätzliche Funktionalität des Verfahrens ist die Gewichtsmessung des Fahrzeuges. Die Last, die jeder einzelne Reifen zu tragen hat, kann durch die Integration der gemessenen Reifendrücke über die Fahrstrecke und Breite des Reifens ermittelt werden. Das Achsgewicht oder das Gesamtgewicht des Fahrzeugs wird durch Aufaddierung der Lasten der einzelnen Reifen der Achse oder des Fahrzeuges ermittelt

Eine einfache Installationsart ist für das Verfahren die direkte Aufbringung auf der Fahrbahnoberfläche, meist geschützt durch eine Auf- und Abfahrrampe. Diese Montageweise ist einfach und schnell durchzuführen, besitzt jedoch Nachteile, die durch die vertikale Beschleunigung der Achse hervorgerufen werden. Insbesondere treten hierbei sprunghafte Laständerungen oder ein teilweise Überspringen des Sensors auf und führen - neben erhöhter Belastung und Verschleiß der Sensorplatten - zu erhöhten Messabweichungen.

Besonders hohe Genauigkeit und eine Minimierung der Belastung des Messverfahrens erreicht man dadurch, dass man die Sensorplatten bündig so in den Boden einlässt, so dass die Fahrzeugachse keine durch eine Rampe o. ä. hervorgerufene vertikale Bewegung ausführen muss und es zu keinen störenden Schwingungen des Reifens oder der Achse kommt.

Bei der Erfindung handelt es sich um eine Kombination der Reifendruckmessung und der Profiltiefenmessung, die vorzugsweise nacheinander während des Überfahrens des Fahrzeuges über Messstationen geschieht. Hierbei wird der Reifendruck beispielsweise durch das oben beschriebene Verfahren vermessen. Die Profiltiefe wird durch ein abtastendes oder optisches Verfahren erfasst. Beispiele sind das Lichtschnitt- oder Laser-Lichtschnitt-Verfahren.

Vorzugsweise wird die Profiltiefe über Triangulation bestimmt. Beispielsweise ist ein Lasertriangulationsverfahren zur Bestimmung der Profiltiefe insbesondere auch dazu geeignet, das unbelastete Profil zu vermessen. Dies ist grundsätzlich bereits deshalb der Fall, weil erfindungsgemäß vorgesehen ist, das Reifenprofil unter Messstrahleinfallswinkeln bezüglich der Fahrbahnebene kleiner als 90° anzustrahlen, wobei die Vermessung des Reifenprofils stets bei einem gewissen Abstand des Reifens zur Messvorrichtung stattfindet und niemals der durch die Reifenaufstandsfläche definierte, belastete Profilabschnitt zur Profiltiefenbestimmung herangezogen wird. Bei der vorgeschlagenen Meßmethode wird also stets das unbelastete Profil vermessen, welches im Vergleich zum belasteten keine Verstauchung erfährt, wodurch die Anwendung des Triangulationsverfahrens in diesen Bereichen keine Verfälschung der Messwerte nach sich führt.

Die Profiltiefe kann auch mit Hilfe eines Licht-Schatten-Übergangs oder einer normalen Lichtquelle über Triangulation ermittelt werden.

Vorzugsweise kann ein derartiges Triangulationsmessverfahren darüber hinaus über eine geeignete Synchronisation der Verschlusszeit einer das reflektierte Signal dedektierenden Kamera und der Anschaltzeit der Lichtquelle, wie etwa des Lasers, aufweisen, so dass die Kamera im wesentlichen lediglich die Intensität der Lichtquelle misst, wobei störendes Hintergrundlicht, wie Sonnen- oder Streulicht bei diesem Verfahrens weitestgehend ausgeschlossen werden.

Dabei sollte die Triangulation unter einem Winkel kleiner als 90° zur Reifenoberfläche durchgeführt werden. Dies vermeidet, dass bei einer Triangulation auf einer möglicherweise nassen Oberfläche des Reifens Spiegelungen in der Kamera auftreten, die die Messung stark beeinträchtigen können. Eine Triangulationsmessung aus einem relativ flachen Winkel heraus verhindert diesen störenden Spiegelungseffekt.

Da bei der Triangulationsmessung die Profiltiefenbestimmung stets nur in einem kleinen Umfangsbereich des Reifens stattfindet, können mehrere aufeinander folgende Messungen desselben Reifens, beispielsweise auch an verschiedenen Tagen, zu einer Qualifizierung des gesamten Umfangsbereichs eines Reifen genutzt werden.

Eine weitere Quelle für Fehlmessungen sind Verschleißmarken, die normalerweise an einem Fahrzeugreifen vorhanden sind. Hier ist es sinnvoll, zwei Laserstrahlen zu nutzen, um Fehlmessungen auf den Verschleißmarken des Reifens zu erkennen und zu vermeiden. Als Alternative können mehrere Messungen durchgeführt werden.

Um die vollständige Qualifizierung des gesamten Reifenumfangsbereichs mittels unmittelbar aufeinander folgender Teilmessungen zu ermöglichen, ist erfindungsgemäß auch vorgesehen, das zuvor beschriebene Triangulationsmessverfahren zur Profiltiefenbestimmung in einen Bremsenprüfstand zu integrieren. Hierdurch kann der Reifen in seinem gesamten Umfang bezüglich verschiedener Profileigenschaften, wie Profiltiefe oder Profilfehler, durchgemessen werden.

Es kann sich darüber hinaus als sinnvoll herausstellen, eine verfahrensgemäße Triangulationsmesseinrichtung zwecks Aufbringung auf die Fahrbahnoberfläche und zum Schutz dieser, in eine Auf- und Abfahrrampe, bzw. eine Überfahrrampe zu integrieren.

Im Folgenden soll die Erfindung anhand der beigefügten Zeichnung näher erläutert werden. Es zeigt:

Figur 1    ein erstes Beispiel einer Anordnung von Lastsensoren, bei denen Lastsensoren einer ersten Reihe zu den Lastsensoren einer zweiten Reihe in Fahrtrichtung A eines Fahrzeuges zueinander versetzt sind;

Figur 2    ein zweites Beispiel einer Anordnung von Lastsensoren; und

Figur 3    ein drittes Beispiel einer Anordnung von Lastsensoren; und

Figur 4    ein viertes Beispiel einer Anordnung von Lastsensoren; und

Figur 5    ein Beispiel für eine Streckenmessung mit Hilfe der Lasertriangulation, um die Profiltiefe eines Reifens festzustellen.

Die Fahrtrichtung ist in der Zeichnungsfigur dabei durch den Pfeil A angegeben. Eine erste Reihe 10 von Lastsensoren, z.B. 1, 3, 5, ... ist gegenüber einer zweiten Reihe 20 von Lastsensoren, z.B. 2, 4, 6, ... um einen Betrag x quer zur Fahrtrichtung versetzt. Der durch die Geschwindigkeit des Fahrzeuges erzeugte Zeitversatz beim Auftreffen des Reifens auf die beiden Reihen 10, 20 ermöglicht somit die Erfassung eben dieser Geschwindigkeit. Der Vorteil liegt darin, dass man nur die Anzahl Sensoren benötigt, die im Stand der Technik in einer Reihe verwendet werden, jedoch zusätzlich noch der Vorteil der Geschwindigkeitsinformation hinzukommt. Dabei sind die Lastsensoren nicht elektrisch seriell geschaltet, sondern parallel oder werden zumindest datentechnisch parallel ausgelesen.

Die Sensorflächen müssen einen Abstand zueinander einhalten, damit sie sich nicht gegenseitig überlappen. Somit bleiben zwischen den Sensorflächen schmale Spalte ungemessen.

Die versetzte Anordnung erlaubt die Vergrößerung bzw. Verbreiterung der einzelnen Sensorflächen bis zum Doppelten des Abstandes zwischen den Lastsensoren. Hierdurch kann der störende Einfluss des Reifenprofils ohne wesentliche Auflösungsverluste wesentlich reduziert werden.

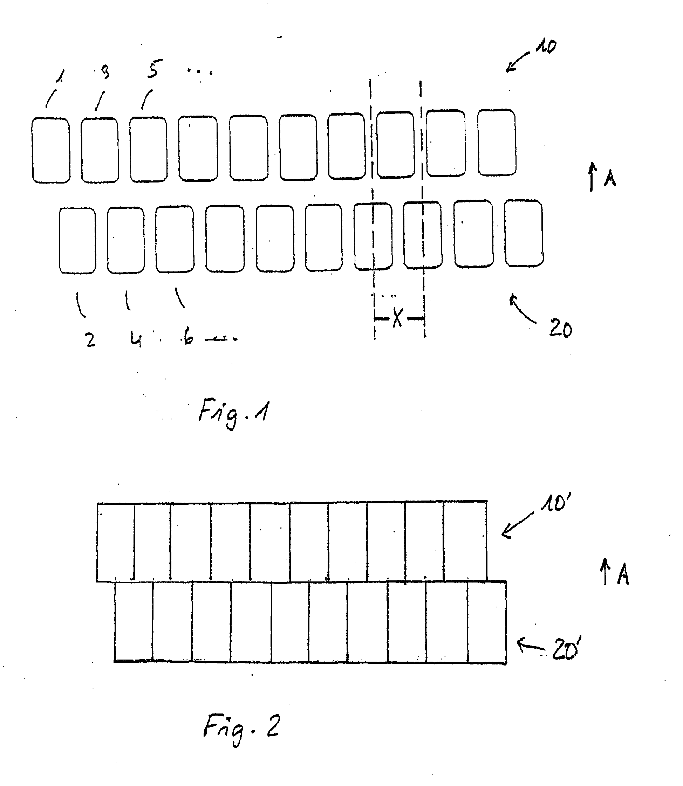

Figur 2 zeigt ein Beispiel einer Anordnung aus zwei Reihen 10', 20' von Lastsensoren, die sowohl in Fahrtrichtung A als auch quer dazu dicht an dicht angeordnet sind. Somit werden die schmalen Spalte, die bei der Ausführungsform nach Figur 1 vorliegen, vollständig vermieden, und der Einfluss von Längsrillen kann erfasst und gegebenenfalls kompensiert werden.

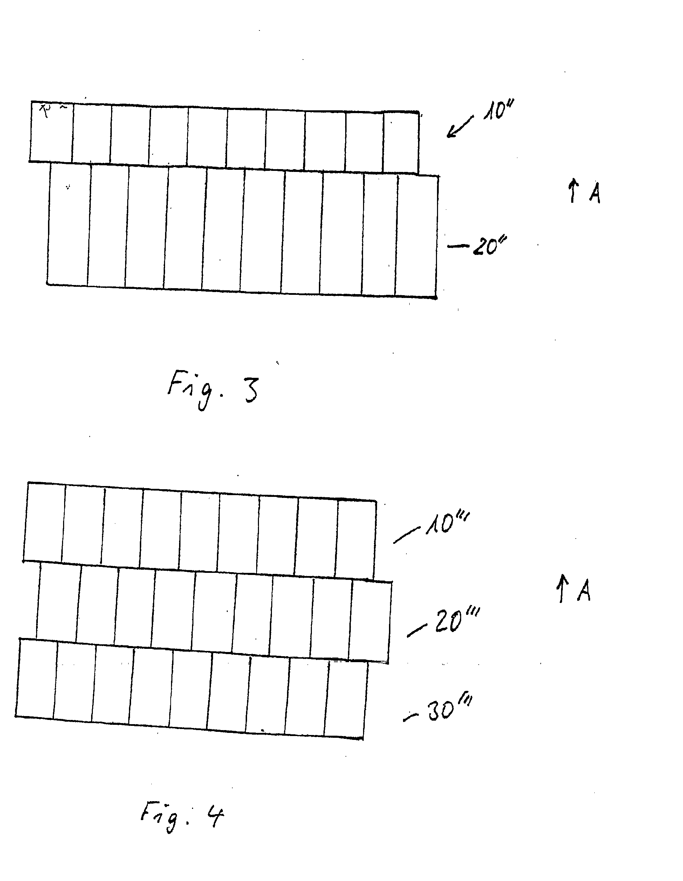

Figur 3 zeigt ein Beispiel einer Anordnung von Lastsensoren, bei der eine erste Reihe 10" der Lastsensoren und eine zweite Reihe 20" der Lastsensoren unterschiedliche Sensorlängen in Fahrtrichtung haben. Hierdurch kann der Profileinfluss stark reduziert werden, andererseits kann die tatsächliche Auflagelänge eines Reifens mit geringer Last und hohem Druck genau bestimmt werden.

Figur 4 zeigt ein Beispiel einer Anordnung von Lastsensoren, bei der drei Reihen 10"', 20"', 30"' von Lastsensoren mit gleicher Sensorlänge angeordnet sind. Es ist unbedingt vorteilhaft, zwei oder mehr Reihen aus Lastsensoren vorzusehen. Durch die redundante Information, die damit erlangt wird, wird das Ergebnis sicherer. Die Anordnung würde dann allerdings entsprechend teurer.

Weitere Abänderungen der Anordnungen von Lastsensoren sind möglich. Wenn hier redundante Information erforderlich ist, können auch vier oder mehr Reihen von Lastsensoren vorgesehen sein, wobei die Sensorlängen in den einzelnen Reihen gleich oder unterschiedlich sein können. In den Zeichnungen ist lediglich dargestellt, dass zwei Reihen um eine halbe Sensorbreite voneinander versetzt sind. Auch andere Versetzungen sind möglich, beispielsweise um ¼ der Sensorbreite oder irgendeinen anderen Bruchteil von dieser.

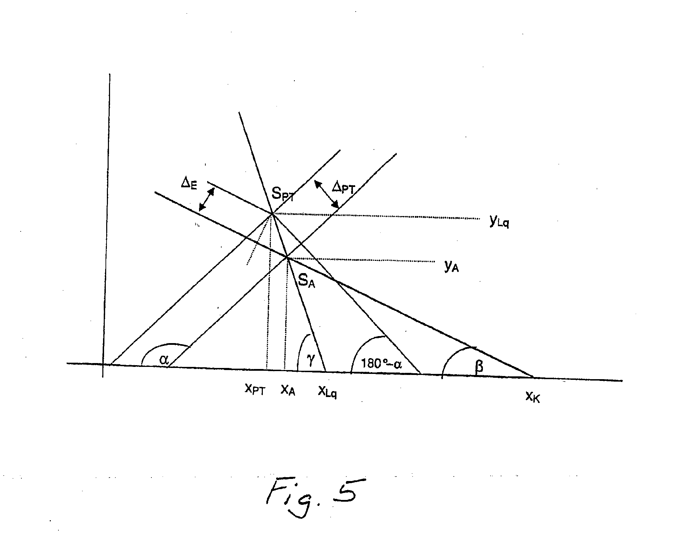

Figur 5 zeigt ein Beispiel einer Streckenmessung mit Hilfe der Lasertriangulation, das zum Bestimmen der Profiltiefe herangezogen wird. In Figur 5 ist

| | |
|---|---|
| $\Delta_{PT}$ | zu messende Profiltiefe |
| $r_A$ | Außenradius Reifen |
| $x_{Lq}$ | horizontale Entfernung der Lichtquelle (Lasern) zum Auflagepunkt des Reifens auf dem Untergrund |
| $\alpha$ | Tangentenwinkel |
| $\beta$ | Kamerawinkel |
| $\gamma$ | Laserwtnkel |
| $x_K$ | horizontale Entfernung der Kameras zum Auflagepunkt des Reifens |
| $S_A=(x_A/y_A)$ | Messpunkt auf der Auflagefläche des Reifens |
| $S_{PT}=(x_{PT}/y_{PT})$ | Messpunkt in der Profilrille des Reifens |
| $\Delta_E$ | resultierender Versatz in der Objektebene |

Die Kamera sieht vom Punkt ($x_K$/0) unter dem Winkel $\beta$ und die Lichtquelle vom Punkt ($x_{Lq}$/0) unter dem Winkel $\gamma$ in Richtung des zu messenden Objektes. Die Strecke $\Delta_E$ in der Objektebene resultiert in einer Strecke $\Delta_{Pix}$ in der Bildebene, die Strecken verhalten sich proportional zu einander (Strahlensatz). Über die Auswertung der Streckendifferenz $\Delta_{Pix}$ bzw. $\Delta_E$ kann die Strecke $\Delta_{PT}$ folgendermaßen bestimmt werden.

$$\Delta_{PT} = \frac{\Delta_E \cdot \cos(\gamma - (180^\circ - \alpha))}{\sin(\gamma - \beta)}$$

Die Umrechnung von $\Delta_{Pix}$ in $\Delta_E$ erfolgt mit Hilfe der verwendeten Objektivbrennweite und der Pixelabstände.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Verfahren zum Feststellen des Druckes und der Profiltiefe bei einem pneumatischen Fahrzeugreifen, der an einem Fahrzeug angebracht ist, wobei:

der Druck mit Hilfe einer Anordnung aus Lastsensoren, die Kraftsignale für ein zweidimensionales Muster der Kraftverteilung liefert, die von dem Fahrzeugreifen in Kontakt mit den Sensoren ausgeübt wird, wenn sich das Fahrzeug über die Anordnung bewegt, ermittelt wird, wobei der Reifendruck aus der Kraftverteilung bestimmt wird,

**dadurch gekennzeichnet, dass**

vor, während oder nach der Bestimmung des Druckes die Profiltiefe des Reifens über Triangulation bestimmt wird, wobei die Triangulation auf unbelastete Profilabschnitte des Reifens angewendet wird und dazu der Einfallswinkel eines Messstrahls unter einem Winkel kleiner als 90° bezüglich einer Fahrbahnoberfläche auf das unbelastete Reifenprofil einfällt.

2. Verfahren nach Anspruch 1, **dadurch gekennzeichnet, dass** die Profiltiefe über Triangulation mit Hilfe eines Lasers, eines Licht-Schatten-Übergangs oder einer normalen Lichtquelle ermittelt wird.

3. Verfahren nach Anspruch 1, **dadurch gekennzeichnet, dass** zum Ausblenden von Hintergrundlicht die Verschlusszeit einer Kamera und die Abschaltzeit einer Lichtquelle, wie etwa eines Lasers, synchronisiert sind, so dass die Kamera im wesentlichen lediglich die Intensität der Lichtquelle misst.

4. Verfahren nach einem der Ansprüche 2 bis 3, **dadurch gekennzeichnet, dass** die Triangulation unter einem Winkel kleiner als 90° zur Reifenoberfläche durchgeführt wird.

5. Verfahren nach einem der Ansprüche 1 bis 4, **dadurch gekennzeichnet, dass** mehrmalige Messungen desselben Reifens zu einer Qualifizierung des gesamten Umfangsbereichs des Reifens und/oder zum Ausschalten der Effekte von Verschleißmarken herangezogen werden.

6. Verfahren nach Anspruch 2, **dadurch gekennzeichnet, dass** mit mindestens zwei Laserstrahlen gemessen wird.

## Claims

1. Method for the determination of the pressure and the profile depth of a pneumatic vehicle tire which is installed on a vehicle, whereby:

the pressure is determined by means of an array of load sensors which supply force signals for a two-dimensional pattern of the fore distribution which is exerted by the vehicle tires in contact with the sensors when the vehicle moves over the array, whereby the tire pressure is determined from the distribution of force.
**characterized in that**
before, during or after the determination of the pressure, the profile depth of the tire is determined by triangulation, whereby the triangulation is used on unloaded profile sections of the tire, and for this purpose the angle of incidence of a measurement beam striking the unloaded tire profile is an angle of less than 90° with respect to a road surface.

2. Method as recited in Claim 1, **characterized in that** the profile depth is determined by triangulation by means of a laser, a light-shadow transition or a standard light source.

3. Method as recited in Claim 1, **characterized in that** for the blocking of background light, the shutter speed of a camera and the activation time of a light source such as a laser, for example, are synchronized so that the camera measures essentially only the intensity of the light source.

4. Method as recited in one of the Claims 2 to 3, **characterized in that** the triangulation is performed at an angle of less than 90° with respect to the tire surface.

5. Method as recited in one of the Claims 1 to 4, **characterized in that** multiple measurements of the same tire are used for a qualification of the entire circumference of the tire and/or for the elimination of the effects of wear marks.

6. Method as recited in Claim 3, **characterized in that** the measurements are performed with at least two laser beams.

**Revendications**

1. Procédé pour déterminer la pression et la profondeur des sculptures d'un pneumatique de véhicule qui est installé sur un véhicule, dans lequel la pression est déterminée à l'aide d'un arrangement de capteurs de charge, qui fournit des signaux de force pour un modèle bidimensionnel de répartition des forces, qui est exercé par le pneu du véhicule en contact avec les capteurs quand le véhicule se déplace au-dessus de l'arrangement, la pression des pneumatiques étant déterminée à partir de la répartition des forces, **caractérisé en ce qu'**avant, pendant ou après la détermination de la pression, on détermine la profondeur des sculptures du pneumatique par une triangulation, la triangulation étant utilisée sur des segments de profils non chargés du pneumatique, l'angle d'incidence d'un faisceau de mesure tombant à cette fin sur le profil de pneumatique non chargé, sous un angle inférieur à 90° par rapport à la surface de la chaussée.

2. Procédé selon la revendication 1, **caractérisé en ce que** la profondeur des sculptures est déterminée par une triangulation à l'aide d'un laser, d'une transition lumière-ombre ou d'une source lumineuse normale.

3. Procédé selon la revendication 1, **caractérisé en ce que**, pour diaphragmer la lumière de fond, le temps d'obturation d'un appareil photographique et le temps de connexion d'une source lumineuse telle que par exemple un laser sont synchronisés, de sorte que l'appareil photographique mesure pour l'essentiel uniquement l'intensité de la source lumineuse.

4. Procédé selon l'une des revendications 2 à 3, **caractérisé en ce que** la triangulation est mise en oeuvre sous un angle inférieur à 90° par rapport à la surface du pneumatique.

5. Procédé selon l'une des revendications 1 à 4, **caractérisé en ce que** plusieurs mesures du même pneumatique sont utilisées pour une quantification de la totalité de la zone périphérique du pneumatique et/ou pour la désactivation des effets de marques d'usure.

6. Procédé selon la revendication 2, **caractérisé en ce que** la mesure est effectuée avec au moins deux faisceaux laser.

Fig. 1

Fig. 2

Fig. 3

Fig. 4

Fig. 5